# EUROPEAN PATENT APPLICATION

(11) **EP 2 532 223 A1**
(43) Date of publication of application: **12.12.2012**
(21) Application number: 11739337.1
(22) Date of filing: 31.01.2011
(51) Int. Cl.: A01G 7/00

(54) **PLANTING STRUCTURE AND METHODS**

(30) Priority: 05.02.2010 CN 201010111924
(71) Applicant: Lanzhou Jinfule Biotechnology Co., Ltd., Lanzhou, Gansu 730030 (CN); Kinstar International Limited, Road Town (VG); Spring Power Limited, Road Town, Tortola (VG); Jin Jin Pacifique Compagnie, 92160 Antony (FR)
(72) Inventor: JIN, Jifan, Gansu 730030 (CN); GUO, Yongjie, Gansu 730030 (CN)
(74) Representative: Wablat Lange Karthaus
(86) International application number: PCT/CN2011/000184
(87) International publication number: WO 2011/095058

(57) **Abstract**

A planting structure includes at least one ridge (1) and at least one furrow (2) connected together. The furrow (2) is filled with organic materials, the density of which is less than that of the ridge (1). A planting method is also provided. Said planting structure and method can condition soil, and increase the growth amount of the wild and cultivated plants.

## Description

### Technical Field

The invention relates to the field of agricultural technology, particularly relates to a planting structure which can significantly increase the growth amount of wild and cultivated plants. This planting structure can effectively increase (even increase several times) the growth rate, yield, biomass etc. of most of the plants on the earth, and improve the quality of the plants. Moreover, it also has the functions of soil improvement and removing soil pollution, and is environment-friendly.

### Background Art

With the development and progress of modem society, the overall growth of the world's population, the consumption of the earth's resources, especially plant resources and food resources by human beings increase exponentially, resulting in stress and scarcity of global resources and making them become a trend.

Excessive consumption of oil and gas resources increases environmental pollution; excessive consumption of forest resources undermines the balance of atmosphere and causes shortage of clean air which is necessary for human beings. Meanwhile, due to excessive consumption and destruction, wild plants, grass and shrubs reduce significantly, that makes land desertification become increasingly serious. In order to get more harvest, more and more pesticides, fertilizers, and various types of growth hormones are used in cultivated plants, that makes soil polluted and hardened more seriously, meanwhile, nutrient utilization and production capacity are decreased constantly, and quality of harvest and seeds is damaged year by year. Moreover, the high investment of agricultural land, fruit land, reforestation forest land is increasing, and low utilization and quality are still declining, the production also shows a decreasing trend; in order to maintain the previous production, the cost for agriculture is increased higher and higher, thus many countries have granted a lot of money and material subsidies for agriculture. In China, due to being unprofitable in cultivation industry many individual farmers have adopted the way of abandoning fields or transferring their fields to large-scale growers, they work outside home to make money to compensate the profit lost in agriculture, that is to say, gain on the roundabouts what lose on the swings.

Contemporary agriculture is very developed and advanced in plant cultivation research and methods of technological innovation. The advanced countries in the world have made many groundbreaking achievements in soil analysis, the applying proportion of pesticides or fertilizers, a variety of new R & D fertilizers, herbal pesticides, detection of the applying proportion of pesticides or fertilizers used for soil or plant, detection of the results of plant growth and development, quantitative and qualitative analysis and calculation, controlling means of water, fertilizer, gas, heat, leaves, stems, roots and other ways and methods. For example, in the countries such as China, some technologies such as the rapid analysis of nutrient in soil and plants, straw returning, slow and controlled release of fertilizer have been successful used; rainwater harvest and water-saving technology, plant product safety testing technologies are fully mature. In addition to these, the countries advanced in plant technologies also develop many new advanced technologies, for example, drip irrigation technology in Israel, the soilless cultivation technology in Israel and France, the growth hormone and clean, pollution-free fertilizer technology in France, the controlled traffic tillage technology in Australia, the conservation tillage technology and back planting technology in the United States and Europe, they solve many important problems currently present in plant growth and development, and plant cultivation areas.

Despite the current global plant technologies including plant cultivation technology have been developed to a mature and advanced degree as the above, there are still problems unsolved or unsolved effectively in the fields including artificial plant growth and development, plant cultivation, planting and plants, planting and soil, soil and its structure, soil and energy, and the long term global problems include input and pollution, input and utilization, balance and harmony of input and allocation, thus it is impossible to generally increase the plant production or weight, or volume occupies space to more than 30% by artificial efforts (let alone more than 50%, 100%, 500% etc.), meanwhile, it is also impossible to restore the quality of plants and their fruit quality to the highest level in history.

With persevering efforts the present inventor creates a new structure technology of that realizes automatic virtuous circle, allocation and supply of the soil-plant energy (hereinafter referred to "a new structure technology of the soil-plant energy"), which can effectively solve the problems (i.e. unbalance and un-harmony) between plants (including crops) and soil, nutrient and energy at one time in a whole. Thus the energy from water, fertilizer, gas, heat, leaves, stems and roots can be completely put into the growth and development of plants, plants cultivation, soil and the plants themselves, so as to begin a effective operation, extension, transfer, exchange, allocation and thus form an ideal and perfect automatic co-ordination, harmony and balanced configuration cycling system, completely solving the problems such as pollution and not being friendly with environment caused by the input which is not absorbed, a big waste of energy and low effective use of energy caused by the input which is not absorbed, not being able to automatic allocate the input energy (such as pesticides, fertilizer, water, gas and heat) caused by not being a self virtuous circle, not being able to efficiently increase the production of plants(e.g. to double), and not being able to restore the quality of plants and their fruit quality to the highest level in history. The new structure technology of the soil-plant energy according to the invention can solve the above worldwide problems on plant growth and development, plant cultivation, and is of great importance.

### Summary of the Invention

The object of the invention is to provide a planting structure for improving the growth amount or yield of the plants.

Another object of the invention is to provide a planting method based on the above planting structure.

The planting structure according to the invention includes at least one ridge and at least one furrow which are connected together. The furrow is filled with organic materials which have a density less than that of the soil.

The above planting structure may further comprise a plurality of rides and a plurality of furrows which are connected together, wherein the ridges are spaced by furrows.

In the above planting structure, the ridge may be soil and / or other support of plant roots. The soil may be wilderness soil, desert soil, saline-alkali soil, semi-saline-alkali soil, acidic soil or loam. The planting structure according to the invention can bring better effect when it is applied to inferior soil such as wilderness soil, saline-alkali soil and acidic soil, and increase even several times of plant growth amount compared with routine cultivation. The other support of plant roots is one or more selected from the group consisting of sand, gravel, plastic, wood chips and peat.

In the above planting structure, the ridge may be in a shape of rectangle, roundness, ellipse or irregular shape. Herein, said shape is a shape when overlooking the ridge.

In the above planting structure, the vertical section of the ridge may be in a shape of arch, trapezoid, inverse trapezoid, rectangle or irregular shape.

In the above planting structure, the shape of the furrow is matched with that of the ridge. A person skilled in the art should understand, "match" as used in here means, for example, when the vertical section of the ridge is in a shape of trapezoid, the vertical section of the corresponding furrow is in a shape of inverse trapezoid; alternatively, when the vertical section of the ridge is in a shape of rectangle, the vertical section of the corresponding furrow is also in a shape of rectangle; since the adjacent ridge and furrow are closely connected or even as a whole, generally the ridge and the furrow are formed by digging the soil, i.e. a changed shape of the soil by digging the soil per se. Of course, in some circumstance the furrow collapse due to loosen soil or other reasons, then the wall of the furrow should be strengthened, and the shape of the furrow is still matched with that of the ridge. When the ridge is in a shape of roundness or ellipse, the furrow is in a shape of corresponding shape of roundness or arch.

In the above planting structure, generally the up edge of the furrow wall is as high as or lower than the ridge; if necessary the up edge of the furrow wall may be higher than the ridge, and such structure is called a hidden ridge-furrow type structure.

In the above planting structure, pipes for supplying nutrient and / or water may be disposed in the ridge and / or the furrow.

In the above planting structure, the organic materials may be one or more selected from the group consisting of lignin, cellulose, semi-cellulose, green manure, smashed or chopped straw, sawdust, animal body and its attachments, and animal waste, or may be various coated organic materials coated with film.

The shape of the organic materials may be:
powder, preferably with a particle size of 1 mm to 5 mm;
block, preferably with a block size of 5 mm to 50 mm; or
rod, preferably with a length of 30 mm to 70 mm and diameter of 5 mm to 25 mm.

However, when the size of the organic materials is very fine, it may be 0.01 nm or less.

The above planting structure may be a multi-layered, stereoscopic planting structure, for example, a routine multi-layered planting structure built with propping stand in greenhouse, and each layer of the structure has ridges and furrows which are connected together.

The invention further provides a portable plant planting structure comprising the above planting structure and a device convenient for its transportation, for example, detachable propping stand with wheels. This is of great significance to some important economic crops.

The invention further provides a planting method, comprising a step of planting plants on the ridge of the above planting structure. Additionally, the plants can also be planted on the furrow of the planting structure.

The invention further provides a method for conditioning soil, which comprises steps of treating soil to form the above ridge and furrow structures which are connected together, and adding organic materials into the furrow, wherein the density of the organic materials is lower than that of the soil. Since the organic materials with a relative low density have allocation function for water retaining and fertilizer holding, the redundant nutrient, energy and saline-alkali which is harmful to growth of plants etc. in the ridge flow to the furrow by washing of rain water or artificial irrigating to make the structure of the soil more reasonable, then the water, nutrient etc. in the furrow and the soil in the ridge will constitute a dynamic balance of water and nutrient. Through such a way of conditioning, the structure of soil becomes more reasonable, and availability of nutrient is significantly increased. As to saline-alkali soil and acidic soil, the saline-alkali and acidic substances in the soil can be discharged and overcome the shortage of long term soil harden, making the soil more suitable for cultivation.

The furrow according to the invention can realize very good function of maintaining water and reducing water evaporation by filled with organic materials (such as sawdust) and is capable of resisting drought in desert. Meanwhile, in the area with frequent waterlogging the furrow can realize the function of storing water by embedded with dry organic materials and is capable of resisting waterlogging at a certain degree in rainy seasons. The planting structure according to the invention obtains notable advantages in many different areas. Particularly in desert area, due to the furrow's function of maintaining water, seeds of trees can be directly sowed on the ridge by dribble seeding or scatter seeding until they grow into shrubs. In this way it also surpass the original method of planting trees after planting grass which is time-consuming and strenuous with low survival rate, and it significantly saves time and investment costs; the applicant conducts planting experiment in an area of 150 mu (1 mu is about 666.67 square meter) in desert area and obtains success. The planting structure according to the invention is more effectively than the Israeli drip irrigation in practical applications; for drip irrigation water evaporates quickly, thus the dripping needs to continue, that leads to high cost and low efficiency, while the furrow of the invention is similar to an object for releasing water slowly, so as to avoid the rapid consumption of the moisture, it is suitable to use in drought area especially desert area.

The advantages of the invention lie in that:
1) The energy (such as pesticides, fertilizers, water, gas and hot, biological agents) put into soil is completely allocated by the "structure" according to the invention, and they achieve an automatic virtuous circle, so as to allow the plants vastly have the capability of absorption, interchange, and transformation; the excessive input in soil is effectively used and the pollution is feasibly reduced, decreased and constantly improved to form a conversion toward sound direction, and the hardening and pollution of soil is continuously alleviated until completely disappeared.
2) After the flow, interchange, transformation, migration etc. of energy in the soil are cycled automatically through the "structure" according to the invention, the absorbing and fusing ability of the plants on soil to absorb, utilize and transform nutritional energy is also totally enhanced and improved, so as to effectively and completely ensure the yield of plants on the soil increased by several times and their product quality increased constantly until restore to the highest level in history.
3) The invention can effectively re-allocate all of the energy existing in soil, and allow it to automatically cycle, migrate, extend, interchange and transform, so as to reach the effect of being effectively and completely used.
4) Since the invention can allow soil and plants to interact in the automatic cycle of energy, which can be effectively and completely used, so as to allow the yield of plants and crops on the saline-alkaline land and desert also can reach an identical or similar level of the arable land which uses the structure of the invention, and the product quality can also increase and finally restore to the highest level in history, under the condition of identical or similar level of safeguard as the arable land.
5) Since the above conditions of 1), 2), 3) and 4) are provided, the excessive energy (such as pesticides, fertilizers, water, gas, hot, heavy metal, and huge amount of pesticide residues) remained in soil per se is exploited, used and consumed completely by the planting structure according to the invention, so as to constantly make the excessive residue (i.e. pollution) in soil disappearing and effectively solve the problems of hardening and pollution in soil, meanwhile, the availability of energy put in soil is increased to a best level.
6) The planting structure according to the invention effectively solve the conflicts in soil between input and pollution, input and utilization, input and allocation, and make them to reach a harmony and balance; not only the quality of the soil per se is constantly increased and improved, but also the quality of the plant products is constantly increased and improved until reach to a highest level in history through a virtuous interaction and transformation between the energy of soil and plants.
7) The planting structure of the invention can be used on saline-alkaline land and desert, and allow them to have better use value and quality value than general arable land.
8) In the process of performing the planting structure of the invention, due to the characteristics of the technique itself there is no need to put in much cost, it is simple and easy to practice and has very important economic value and practical value, and it is also an ideal platform of low-cost, high output and high quality for plant growth, development, and cultivation.
9) The planting structure according to the invention has very good property of adapting to the host, i.e., fully adapting to the host's any planting plan for any varieties in any cultivable environments. Without changing the planting arrangement, plan and planting custom, the host can reach the goal of gaining harvest in several times yield with the product quality better than or superior to the harvest to which the technique of the invention is not applied. Meanwhile, since the present invention changes plants through a soil planting structure system instead of genetic variation, it provides a better promoting platform of energy existence, operation, migration, interchange and transformation for plant cells, thus the invention avoid using genetic modified plants in large scale, and can effectively prevent the potential crisis caused by genetic modified plants, so as to create a more harmonious and safe relationship between human beings and plants.

### Brief Description of the Drawings

Figure 1 is a schematic view of the structure of the ridge and furrow;
Figure 2 is a schematic view of the structure of a plurality of ridges and furrows;
Figure 3 is a schematic view of the structure of a plurality of hidden ridges and furrows; wherein the ridges are level with the ground plane;
Figure 4 is a schematic view of another structure of a plurality of hidden ridges and furrows;
Figure 5A is a schematic view of the structure of the ridge and furrow which is suitable to be used in wildness area; and Figure 5B shows the added sand proof wall;
Figure 6 is a schematic view of the planting structure which is suitable to be used in shallow sea area;
Figure 7 is a schematic view of the planting structure with multi-layered ridges and furrows;
Figure 8 is a schematic view of the planting structure of the small ridge and furrow which is suitable to be used in household;
Figure 9 is a schematic view of the planting structure of sloping field;
Figure 10 is a schematic view of a portable planting structure;
Figure 11 is a schematic view of the planting structure which is suitable to be used in forest land;
Figure 12 is a schematic view of the planting structure which is suitable to planting shrubs;
Figure 13 is a schematic view of the planting structure which is suitable to planting grass;
Figure 14 is a schematic view of the planting structure which is suitable to be used in drought land.

The numbers and their meanings in the above figures respectively are: 1. ridge, 2. furrow, 3. organic materials, 4. seedlings (plants), 5. roots, 6. water supply pipe, 7. nutrient supply pipe, 8. sand proof wall, 9. netted film, 10. hole, 11. wheel, 12. connecting edge, and 13. ground plane.

### Embodiments

The contents of the invention will be described in details with reference to the drawings of the description; however, it should not be understood to limit the scope of the invention. A person skilled in the art may make various modifications and changes to the following embodiments without departing from the spirit and scope of the invention.

The planting structure according to the invention is a planting structure of ridges combined with furrows, particularly it comprises ridges and furrows which are connected with each other, and the furrows are filled with biomass materials.

After the furrows are filled with organic materials, carbon furrows with high carbon content and low density are formed, such a structure is not apt to stacked and has good air permeability and adsorption, to achieve the function of allocating the water retention and fertilizer conservation; the furrows can achieve an exchange cycle of water and nutrients with the ridges, it can be continuously put in fertilizers to conduct cultivation uninterrupted, and the organic materials in the furrows are fermenting continuously through microorganisms and have the function of allocating the gas, hot and temperature, meanwhile the toxic pollution is excluded by the metabolism of microorganisms, the active microorganisms can further improve the soil, and even create a short ecological chain to maximize the utilization of nutrition.

The materials used to form the structure of ridges and furrows may be soil per se, and also may be consolidated to form a shape through metal, plastic or wood etc.; when other materials are used, the ridges and furrows should be directly connected (at least part of them are directly connected).

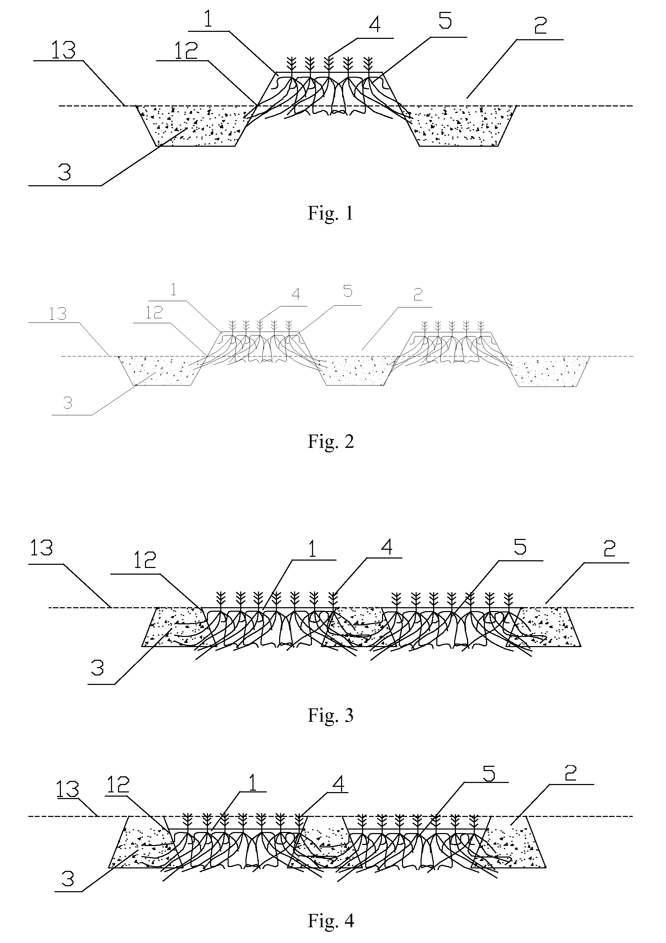

The planting structure according to the invention usually can be classified into the following types:
A: A basic structure of ridge and furrow called ridge-furrow type structure for short (Figure 1);
B: A basic structure of a plurality of ridges and furrows which are connected together, and it is called connected multiple ridge-furrow type structure for short (Figure 2);
C: A basic structure of a plurality of ridges and a plurality of furrows which are connected together, and it is called connected multiple hidden ridge-furrow type structure for short (Figures 3 and 4).

The above three structures are the most basic structures of the planting structure according to the invention, different embodiments can be derived from the above basic structures through setting various systems depending on the local conditions, so as to deal with the best demands of environment, soil, growth and development of plants, blossoming and bearing fruits, and form a best systematic supply and demand structural platform for automatic virtuous cycle of energy.

The above three basic structures and various sub-structures derived therefrom will be described respectively in details as follows:

Firstly, a basic structure of ridge and furrow, i.e. the design of the ridge-furrow type structure, and the description of this system:

The term "ridge" means a layer of soil stacked on the ground plane for cultivation or natural sowing; for the height of the ridge, the highest height is 35 cm (if necessary, it can be higher), the lowest height is 2.5 cm, in principle the most preferable higher height is about 20 cm, and the most preferable lower height is 5 cm. The width of the ridge may not be limited if necessary (when it is matched with the corresponding furrow), for example, generally the longest width is 10 m, and the most preferable width is 2.5 m or less; when the ridge is in a shape of rectangle, the longest length of the ridge may not be limited, and the most preferable length generally is 50 m (the length is determined by a suitable match of the ridge and the furrow). Depending on the practical state of the soil and the environment, the shape of the ridge may be set as rectangle, square, roundness, ellipse etc. For example, as to a roundness ridge, its maximum diameter is about 2.5 m; as to an ellipse ridge, its longest radius is less than 5 m, and the most preferable radius is about 1.25 m. The above is the description of the structure, shape and size of the ridge according to the present invention. The space above the surface of the ridge, bottom space of the ridge and the space around the ridge is the room for the growth, development, blossoming and bearing fruits of the plants. Generally plants (including seeds of the cultivated plants) are planted or naturally sowed on the surface layer of the ridge, then grow, develop, blossom, and the fruits is born in the upper space, lower space or around space, or all the above space. Generally, the part of a cultivated plant (not yet begin to blossom and bear fruits) above the surface of the ridge is called seedling, and the plant part (not yet begin to blossom and bear fruits) below the surface of the ridge is called root system, short as roots. As to a plant naturally sowed on the ridge, the plant part above the surface of the ridge is called natural seedling, and the plant part below the surface of the ridge is called natural roots. Various energy (such as pesticides, fertilizers, water, gas and hot) and nutrients needed for a plant are directly put on the surface and inside of the ridge or the bottom of a seedling according to conventional operation method.

The term "furrow" means digging a furrow below the ground plane for artificial cultivation or natural sowing. Generally, the furrow is in a shape of rectangle, however, it may be square, roundness, ellipse or other shape according to the needs of the cultivation plants or natural sowing plants (for example, forest, beach, hillside or artificially modified plants).

When the furrow is in a shape of rectangle (stereoscopic) with its size (length, width, height or depth), its length is not limited; if necessary, generally the most preferable length is 50 m (determined by matching with the length of the ridge); the width is also not limited (determined by matching with the width of the ridge), generally the most preferably width of the furrow is 15 cm or more. Generally (determined by matching with the width of the ridge) the maximum depth or height of the furrow is: the height of the part above the ground plane (the part higher than the ground plane) is 0.5 cm to 15 cm, and the height of the part below the ground plane (the part lower than the ground plane) is 2.5 cm to 200 cm. As to the most preferable height (depth) of the furrow, the part above the ground plane is 5 cm or less, and the part below the ground plane is 15 cm to 125cm. For the furrow of other shape, in principle when it is set to match with the ridge, depending on the practical needs its size is based on the size of a rectangle block as basic reference parameters.

When the furrow is matched with the ridge, the length of the furrow may not be limited and the most preferable length is 50 m. In the view of cross section, two furrows are set at the two sides of a ridge, and in principle the distance between the two furrows is 2.5 m or less, that is to say, the matched width of the ridge is less than 2.5 m; in special circumstance, in the view of cross section, the distance between the two furrows is larger and is 4 m or less, and the corresponding width of the furrow is also larger, that is to say, when the width of the ridge is 4 m, the width of the furrow beside the ridge is about 30 cm, preferably less than 30 cm, however. A too wide furrow is just a waste of land but does not affect the growth of plants on the ridge. When the top of the furrow is planted plants which are mutually benefit with other plants on the ridges, the width of the furrow should be larger as requirement.

The core technique of the invention is the design of ridge and furrow, they are of an integrated structure in which the ridge and furrow are connected and supplementary to each other, and the furrow is the most important point in this structure of the core technique. Inside the furrow, it is generally a hollow space which should be filled with organic materials, in principle, after being filled with organic materials the furrow should be in a loose state, i.e. the density of the furrow should be less than that of the ridge as well as the substance (including soil) under the ridge. Generally, the density of the materials in the furrow is 0.009 g/cm³ to 1 g/cm³, and most preferably 0.5 g/cm³ to 0.8 g/cm³. Either soil or other filler (the ridge may also include filler) such as sand or gravel is included in the ridge, the density of the filler in the furrow must be less than that of the ridge, and the filler should have loosened interstices.

The relationship between furrows and ridges is described as follows:
1. The furrow serves for the ridge, it is a necessary structure system set for the plants on the ridge, thus the filler in the furrow also serves for the ridge and its content. Without ridge, an individual furrow does not make sense, thus the size and shape of the furrow should be designed depending on the requirement of the ridge, and match with the change of the ridge.
2. The edge of the ridge and furrow should be connected in a line. For example, in a state of rectangle (overlook view), the two edges of a ridge is respectively connected with one edge of the furrow beside (left or right side) the ridge (see Fig. 1). If the edge of the ridge and the corresponding edge of the adjacent furrow are not connected, there will be salinity in the unconnected space segment and the salinity accumulates, that will in some way stop the effective and complete operation of an automatic cycle of nutrients (such as pesticides, fertilizers, water, gas and hot), leading to a significant decrease of the availability of energy and nutrients; moreover, the salinity constantly accumulated in the unconnected space segment will cause soil hardening, severely block the circulation of energy and affect the effective and sufficient cycling supply of nutrients needed by the growth and development, blossoming and bearing fruits of the plants.
3. When the height of the ridge is level to or almost level to the furrow (generally in normal circumstance, the furrow should be lower than the ridge, i.e. the ridge is above the ground plane, and the furrow is all or partially below the round plane). The two edges of the ridge in width direction respectively becomes the same left or right edge of the furrows connected with the ridge in width direction, that is to say, in width direction the left edge of the ridge is also the right edge of a furrow, and the right edge of the ridge is also the left edge of another furrow. If necessary in practical use, the left edge and/or right edge of a ridge may respectively entering inside the right edge and/or left edge of the interval furrows adjacent to the ridge. For example, in case that it is difficult to align the edge line because of environment or other reason, in order to form a connected space segment, for good measures the edge of the ridge may enter into the edge of the furrow.
4. After the furrow is filled with organic materials, if there are conditions (for example, soil) for plants effectively being stood, the top layer of the furrow may allow to plant some specific cultivating plants; the conditions are: firstly, the top layer of the furrow includes soil or other substance such as sand or gravel which can make the plants effectively stand; secondly, the width of the top layer of the furrow is 5 cm or more; thirdly, the height of the plants cultivated on the top layer of the furrow should be lower than that of the plants cultivated on the ridge, and the plants cultivated on the top layer of the furrow must be non-lodging plants which are suitable to, matched with the plants on the ridge, and the plants on the furrow and ridge should be beneficial to each other. For example, when corn is planted on the ridge, the top layer of the furrow should be planted wheat, soybean or garlic; when soybean is planted on the ridge, the top layer of the furrow should be planted mushroom, green onion etc.
5. When the width of the furrow is less than 5 cm, the soil (or other sand, gravel etc.) on the top layer of the furrow can not be cultivated and hold plants, particularly lodging plants whose height is higher than that of the plants on the ridge. The main principle is that the furrow serves for the ridge, thus the cultivation on the furrow should serve for the cultivation on the ridge.
6. The filler in the furrow should be organic materials.

The planting structure according to the invention can effectively and completely solve the fundamental problems for current plants cultivation, i.e. the global problems of disharmony and unbalance between input and pollution, input and utilization, input and allocation, and make them reach an effect of harmony and balance. The planting structure according to the invention can make the energy i.e. various nutrients (such as pesticides, fertilizers, water, gas and hot), ingredients (including various ingredients which are excessive and become pollution), heavy metals etc. among soil (including saline and alkaline land, desert land, arable land), plant support and plants operate an effective, automatic circulation in the ridge-furrow structure, such a virtuous energy operation by allocation, extension, conversion, interchange, conversion, transformation and recombination again improves the nutrition and water supply for plants, makes the nutrient absorption and utilization of plants at different stages of growth, development, blossoming and bearing fruits reach a best state, thereby obtaining a result of increasing the yield of the harvest product by several times with a good quality.

Secondly, the arrangement for a basic structure of a plurality of ridges and furrows which are connected together, called for short, a connected multiple-ridge and multiple-furrow basic structure.

The connected multiple-ridge and multiple-furrow basic structure is formed on the basis of the ridge-furrow basic structure by connecting a plurality (the number is not limited) of ridges and furrows at or inside their left / right edges in the width direction so as to form a basic structure arrangement of a plurality of ridges and furrows which are connected together (in the width direction), called for short, a connected multiple-ridge and multiple-furrow basic structure.

Thirdly, the arrangement for a basic structure of a plurality of hidden ridges and level furrows which are connected together, called for short, a connected hidden multiple-ridge and level multiple-furrow basic structure.

The connected hidden multiple-ridge and level multiple-furrow basic structure arrangement is formed on the basis of the connected ridge-furrow basic structure and connected multiple-ridge and multiple-furrow basic structure, wherein a ridge above the ground plane (including other support plane for cultivation or natural sowing plants) is changed into a ridge below the ground plane, changing it from an apparent ridge above the ground plane into a hidden ridge below the ground plane, then the corresponding furrow is changed into a furrow level to, lower than, slightly lower than, or slightly higher than the ridge, thus it becomes a level furrow. The connected hidden multiple-ridge and level multiple-furrow basic structure is formed by a plurality (the number is not limited) of hidden ridges and level furrows connected together, and it has advantages such as saving labor power by acting according to the local conditions.

A basic structure of a plurality of lower ridges and lower furrows which are connected, called for short, a connected lower multiple-ridge and multiple-furrow basic structure.

A lower ridge is formed on the basis of hidden ridge by digging the ridge from the ground plane down to form a lower water-collecting plane, except that the other size are identical to those of the hidden ridge, the most preferably depth of its digging lower than the ground plane is 0.5m to 1.5 m, and the most preferably depth of the lower ridge is 15 cm to 25 cm; the lower ridge is designed for special plants and district, since some plants are lower, for example, the plants in rain-fed farming area and plants in desert area. For some cultivated plants, they need a lower ridge for collecting and remaining water to prevent soil salinization and help grow.

When the arrangement of lower ridge is set, the arrangement of the furrow which is connected with the ridge should be lower than the ridge, for the connection of the lower ridge and the furrow, since the level of the furrow's top edge is identical to the level of the ridge's bottom edge, the corresponding furrow is connected with the lower ridge at this position by connecting the two edges.

The organic materials are described in detail as follows:

### 1. The structure and shape of the organic materials

The kinds of the organic materials include:
lignin;
cellulose;
semicellulose (for example, decomposed, soaked black);
green manure (including fresh green manure);
straw (including fresh straw);
sawdust (including fresh sawdust); and
other high carbon content plants (such as straw of wheat or rice).

The above organic materials can be filled into the furrow as fillers to form an effective structure arrangement with the furrow, and that forms an inseparable integrated structure. Moreover, the organic materials may also be products coated with film, such as fertilizer coated with film. These organic materials make the energy (such as pesticides, fertilizers, water, gas and hot) put in the ridge effectively extend and migrate to the furrow, leading to an automatic cycling operation of energy within the ridge-furrow structure, alleviating the pollution of the input substance and completely improving the allocation and combination of the input energy, that makes the input energy sufficiently used.

The shape of the organic materials includes:
powder, preferably with a particle size of 1 mm to 5 mm;
block, preferably with a block size of 5 mm to 50 mm; and
rod, preferably with a length about 50 mm and a thickness of 5 mm to 25 mm.

Most preferably fine size of the organic materials is 0.01 nm to 5 mm.

The shape of the fertilizer coated with film may be semi-circular type, and other types such as circular type, elliptic type, rod type, stereoscopic triangular type and multi-angular type, depending on the practical requirement; and it can be attached with inorganic fertilizer with a most preferable diameter of 5 mm to30 mm.

### 2. The organic materials and fertilization

The location (i.e. the furrow) filled with organic materials is not applied fertilizer or at least applied inorganic fertilizer.

### 3. The location for putting in energy

Energy (such as pesticides, fertilizers (including inorganic fertilizers), water, gas and hot) is put on the surface of the ridge or around the ridge, i.e. on and around the soil above the roots of the plants.

### 4. Distance between the organic materials

The most preferably distance between the organic materials is less than 2.5 m, in special circumstance the distance between the organic materials is less than 4 m; that is to say, the most preferably distance between two interval furrows is less than 2.5 m.

### 5. Functions of organic materials as filler for the furrow:

After being filled into the furrow, the organic materials together with the furrow form an effective automatic cycling integrated system, its functions are as follows:
A) fertilizer holding: effectively absorbing the input energy, the run off (residual) energy from the fertilizing location, and nutrients (so as to supply to the plants);
B) water remaining: holding and storing the water from rainfall and irrigation; and
C) roots protecting: the area filled with organic materials (i.e. inside the furrow) is a main growing area for roots (extending), particularly a main area for distribution of hair roots of the plant roots.

### 6. The configuration of the organic materials

In order to further improve cultivation effect, the organic materials to be filled into the furrow can be formulated according to the planting environment and the specific plants, so as to obtain a best effect for plant growth.

Besides the above mentioned kinds of organic materials, the organic materials used for configuration further comprise animal body per se and its attachments such as hairs and bones; moreover, various inorganic substances can also be added if necessary. Various raw materials and organic materials used for configuration and some inorganic substances are mixed and filled together with a lot of other organic materials into the furrows for plants and plant cultivation, so as to produce various desired plant harvests having strong medical treatment function and thereby overcome the side effects of the gene modified plants, and facilitate to produce more and better, pure plant healthy food having strong medical treatment function; meanwhile, various plant harvests for producing special, pure plant food having special function can also be produced.

In the following examples, unless otherwise indicated, all the furrows are filled with organic materials.

### Example 1

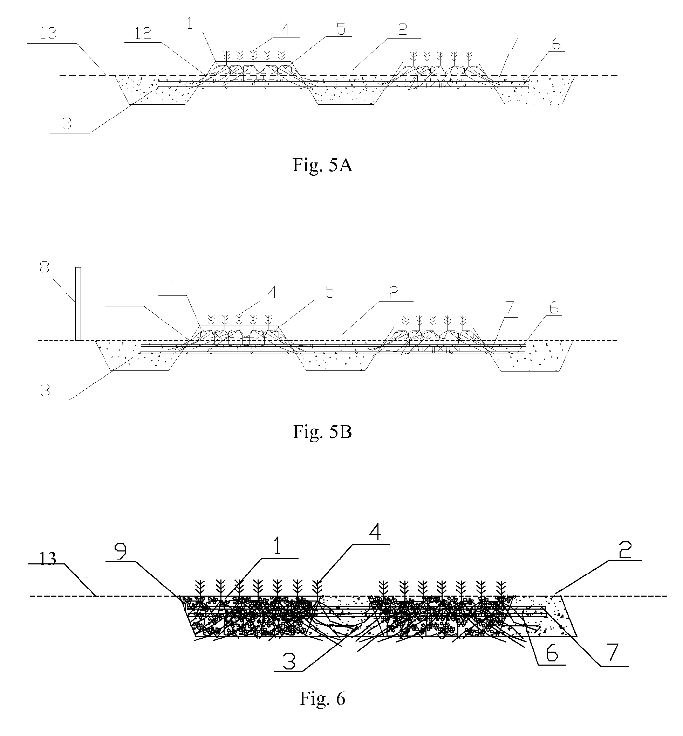

As shown in Fig. 5A, it is a planting structure suitable to be used in desert area. It comprises the connected ridges (1) and furrows (2), wherein the furrows are filled with fillers (3), and the seedlings (4) are planted on the ridges (1), the roots (5) of the seedlings are growing towards the furrows (2).

In order to adapt to desert environment, water supplying pipes (6) and nutrients supplying pipes (7) are installed. The water supplying pipes (6) are used to supply water to roots of plants in a way of infiltration and spray-dripping, the pipes are installed in both the ridges and the furrows.

For the spray-dripping device used herein, the nozzle contacting with plant roots will automatically open and spray fine divided water when it is applied pressure, and the nozzle will close when it is not applied pressure; for the infiltration, permeable membrane is set in the exit of the pipe which around and contacting plant roots, the time for infiltration and the interval time are set; in the time set for infiltrating into the roots, water in the pipe is supplied to plant roots from exit of the pipe with permeable membrane.

As shown in Fig. 5B, as an improved embodiment, sand proof wall (8) can be set at one or two sides of the planting structure. The sand proof wall has the function of preventing sand and wind, and its main material may be sand. The water supplying pipe and nutrients supplying pipe are attached to sand and buried under the sand, and devices for fastening them can be installed if necessary.

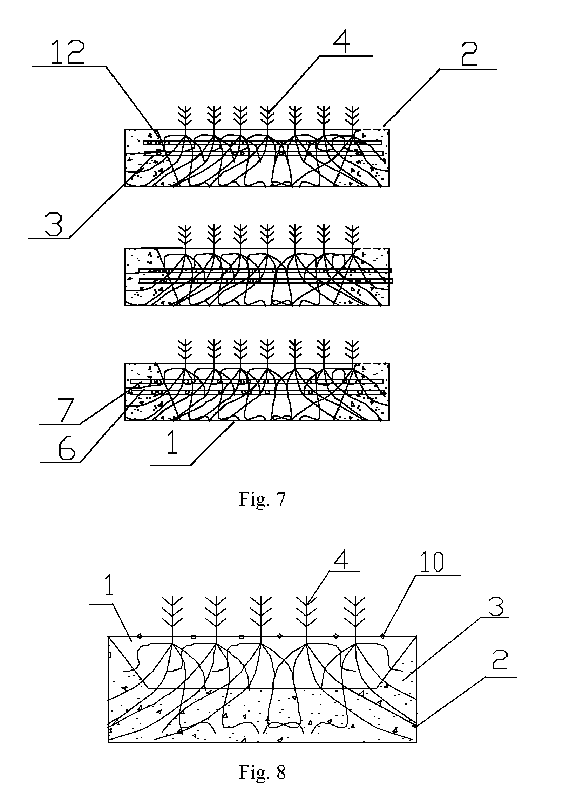

Fig. 8 shows a movable sand box soil planting structure, sand is put in an artificial box to support and fasten plants and their roots; the sand put in is the ridge, and the furrows can be set at the two sides of a ridge or under the ridge, the furrows can also be set at both sides of a ridge and under the ridge. According to the nutritional needs at different stage of plants, the corresponding nutrients are supplied (through pipes).

According to the planting structure of Fig. 5A, a ridge-furrow structure is formed by digging in sand, and piped are set in the ridge for supplying water and nutrition. The shape of the vertical section of the ridge is trapezoid, and the shape of the corresponding furrow is inverse trapezoid; the width of the ridge is 3 m and the ridge is 10 cm higher than the ground plane, the width of the furrow is 30 cm and the depth of the furrow is 90 cm (relative to the ground plane). Smashed corn straws with a size of 5 mm to 25mm are filled in the furrow, and alfalfa is planted on the ridge. Meanwhile, alfalfa is also planted on untreated sand in the local area as control, sowing in April and managing in conventional way until August with a cultivation period of four months. The average growth amount of the plants cultivated in the structure according to the invention is 23 times higher than that of the plants cultivated in the untreated sand as control.

### Example 2

This is an example of the planting structure suitable to apply under thin seawater condition. The thin seawater refers to the water flowing into the sea from a river, such as the water flowing into the sea from Yangtze River, Yellow River etc. The cultivation area of the example is located in the river estuary.

As compared with a general structure, a netted film (9) is set outside the ridge (Fig. 6) to form a netted film ridge, and the film should be a membrane with the function of reverse osmosis such as reverse osmosis membrane; the function of the film is allowing the fresh water enter inside the film and preventing (reverse osmosis) the seawater outside it. Additionally, a cultivation area can also be formed by directly deploying other fillers such as sand and gravel at the river estuary.

A cultivation area may be a cultivation box comprising netted film ridges and furrows, or a cultivation area directly formed with sand, gravel etc. without a netted film, depending on the practical cultivation conditions. In short, the principle of this basic structure is the same as that of the ridge-furrow structure.

### Example 3

This is an example of multi-layer type stereoscopic planting structure. For example, a routine multi-layered planting structure built with propping stand in greenhouse, and each layer of the structure has ridges and furrows which are connected together (Fig. 7). This planting structure can also be deployed inside a building, on the balcony or the roof of a building to take full advantage of the space. The pipes for supplying nutrition and the pipes for supplying water should be set in the ridges and furrows at each layer for convenience of management.

### Example 4

This is an example of a small household type portable planting structure (Fig. 8), in this structure the main part of the furrow (2) is deployed under the ridge (1) to increase the usable area of the ridge. One or more holes (10) which can connect to the furrow (2) are set at the top of the ridge, so as to supply nutrition and water.

A small household type planting structure can supply vegetables and fruits for consumption to a family of several members, the fertilizers can be market available products or urine and feces of the family members.

### Example 5

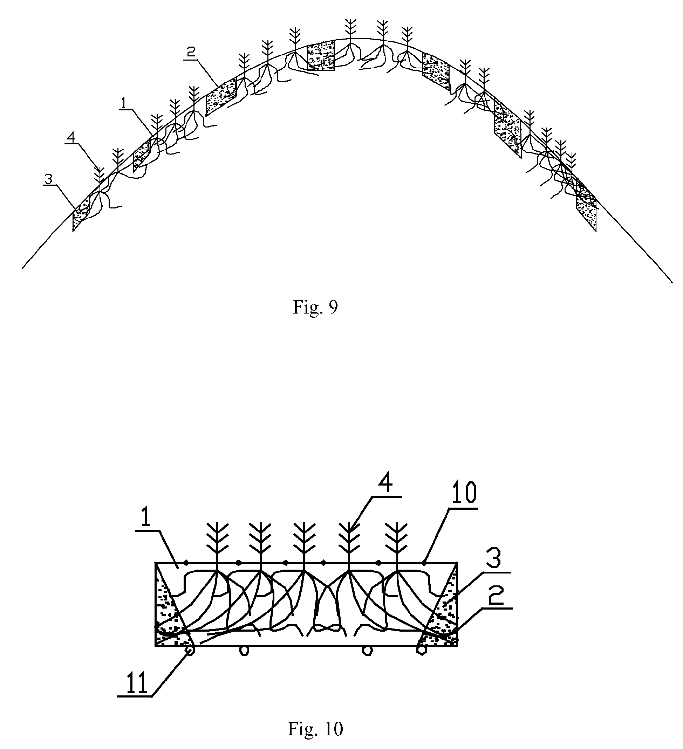

As shown in Fig. 9, it is a planting structure suitable to apply in slanted or rugged sloping land and hilly land, it is similar to the general structure, however, the shape of the ridge (1) or furrow (2) is often irregular, the specific shape is depended on the shape of the sloping land. It is suitable to use hidden multiple ridge-furrow structure or multiple lower ridge-furrow structure.

### Example 6

As shown in Fig. 10, it is a movable ridge-furrow combined planting structure, the furrow (2) can be located at two sides of a ridge (or located around the ridge), and wheels (11) are installed under the planting structure to facilitate the planting structure to move. One or more holes (10) which can connect to the furrow (2) are set at the top of the ridge (1), so as to supply nutrition and water.

The movable multi-function ridge-furrow structure can be available for sale in supermarket, and it is particularly suitable to the people living in desert area to cultivate various plants; the cost of the planting structure is lower, and it is a environment friendly planting structure without any pollution, moreover, the urine and feces of the family members can meet the nutrition requirement of the plants.

### Example 7

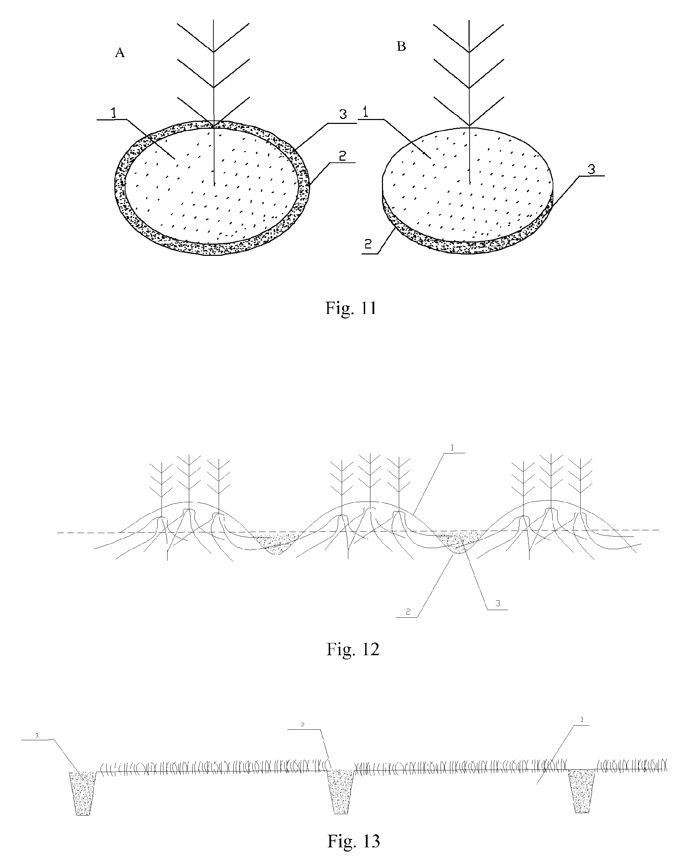

As shown in Fig. 11A, in the planting structure of this example, the shape of ridge (1) is roundness, and the furrows (2) are around the ridge with a corresponding roundness shape matched with the ridge. The planting structure with such a shape is particularly suitable to the cultivation of high and big trees such as eucalyptuses, and it can be widely used in forest land and also suitable to the trees planted at the two sides of a road.

As a variant of the above planting structure, in this embodiment (Fig. 11B) furrow (2) may be in a shape of half round around the ridge (1). Additionally, another variant is a structure that a plurality of furrows (2) are deployed around a ridge (1) like scattered pots, this embodiment is particularly suitable to forest land.

According to the planting structure of Fig. 11A, ridge-furrow structures are deployed in forest land for planting rubber trees, the average diameter of a ridge is 2.5 m (slightly adjustment can be made according to the size of the rubber tree if necessary), the furrow with a width of 15 cm and depth of 30 cm is filled with sawdust, conducting routine management. 100 rubber trees planted in the ridge-furrow structures are taken as test group, and 100 rubber trees planted in conventional land, are taken as control group, both conducting the same routine management. One year rubber yield from the beginning to the end of year 2008 is calculated. The result shows that the yield of the teat group is 1.0 times higher than that of the control group.

### Example 8

As shown in Fig. 12, the connection of ridge (1) and furrow (2) is gentle in this planting structure, the shape of ridge (1) is arch, and the shape of furrow (2) is also arch. This planting structure is particularly suitable to the growth of shrubs.

### Example 9

As shown in Fig. 13, the ridge (1) is relatively wide and flat, and the furrow (2) is relatively narrow and deep, in this way the ridge (1) has a large arable area, and is particularly suitable to grass cultivation.

### Example 10

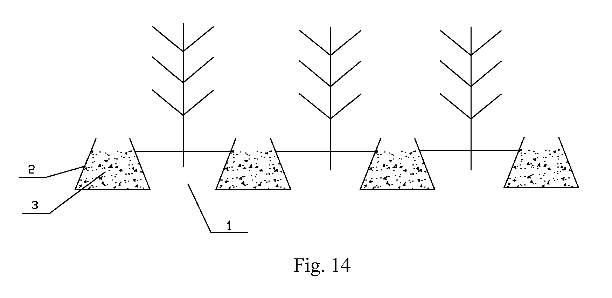

As shown in Fig. 14, it is a multiple hidden-ridge type structure, ridge (1) is lower than the side wall of furrow (2), the shape of the furrow is inverse trapezoid. The open mouth of furrow (2) becomes smaller by extending the side wall of the furrow upward, and that makes rainwater collected on the ridge to irrigate the plants. This structure is particularly suitable to apply in drought area, for example, cultivating fruit trees in drought area.

### Industrial applicability

This planting structure according to the invention can sufficiently increase (even increase several times of) the growth rate, yield, biomass etc. of plants, and meanwhile improve the quality of the plants; moreover it also has the functions such as soil improvement, removing soil pollution and environment-friendly. It is suitable to widely apply in agriculture.

## Claims

1. A planting structure, comprising at least one ridge and at least one furrow which are connected together, wherein the furrow is filled with organic materials which have a density less than that of the ridge.

2. The planting structure according to claim 1, comprising a plurality of rides and a plurality of furrows which are connected together, wherein the ridges are spaced by the furrow.

3. The planting structure according to claim 1 or 2, wherein the ridge is rectangular" round, oval or irregular in shape.

4. The planting structure according to claim 1 or 2, wherein the vertical section of the ridge is arched, trapezoid, reverse trapezoid, rectangular or irregular in shape.

5. The planting structure according to claim 3, wherein the shape of the furrow is matched with that of the ridge.

6. The planting structure according to claim 4, wherein the shape of the furrow is matched with that of the ridge.

7. The planting structure according to claim 5, wherein when the ridge is round or oval in shape, the furrow is round or arc in shape, which is matched with that of the ridge.

8. The planting structure according to claim 1 or 2, wherein the wall of the furrow is higher than that of the ridge.

9. The planting structure according to claim 1 or 2, wherein pipes for supplying nutrient and / or water are disposed in the ridge and / or furrow.

10. The planting structure according to claim 1 or 2, wherein the ridge is soil and / or other support of plant roots.

11. The planting structure according to claim 1 or 2, wherein the soil is wilderness soil, desert soil, saline-alkali soil, semi-saline-alkali soil, acidic soil or loam, and the support of plant roots is one or more selected from the group consisting of sand, gravel, plastic, wood chips and peat.

12. The planting structure according to claim 1 or 2, wherein the organic materials is one or more selected from the group consisting of lignin, cellulose, semi-cellulose, green manure, smashed or chopped straw, sawdust, animal body and its attachments, and animal waste.

13. The planting structure according to claim 1 or 2, wherein the organic materials are organisms with high carbon content.

14. The planting structure according to claim 1 or 2, wherein the organic materials are in a shape of:
powder, with a particle size of 1 mm to 5 mm;
block, with a block size of 5 mm to 50 mm; or
rod, with a length of 30 mm to 70mm and a thickness of 5 mm to 25mm.

15. The planting structure according to claim 1 or 2, wherein the size of the organic materials is 0.01 nm to 5 mm.

16. The planting structure according to claim 1 or 2, wherein the organic materials are organic materials coated with film.

17. The planting structure according to claim 1 or 2, which is a multi-layered planting structure, wherein each layer has ridges and furrows which are connected together.

18. A portable plant planting structure, which has the planting structure according to any one of claims 1 to 17 and a device convenient for its transportation.

19. A planting method, comprising a step of planting plants on the ridge of the planting structure according to any one of claims 1 to 18.

20. The method according to claim 19, further comprising a step of planting plants on the furrow of the planting structure.

21. A method for conditioning soil, comprising steps of treating soil to form the ridge and furrow structures in the planting structure according to any one of claims 1 to 9, and adding organic materials to the furrows, wherein the density of the organic materials is lower than that of the soil.
